# EUROPEAN PATENT APPLICATION

(11) **EP 4 534 604 A1**
(43) Date of publication of application: **09.04.2025**
(21) Application number: 24203439.5
(22) Date of filing: 30.09.2024
(51) Int. Cl.: C08L 77/06

(54) **CONDUCTIVE RESIN COMPOSITION, METHOD OF PREPARING THE SAME, AND MOLDED ARTICLE INCLUDING THE SAME**

(30) Priority: 04.10.2023 KR 20230131372
(71) Applicant: LG Chem, Ltd., Yeongdeungpo-gu Seoul 07336 (KR)
(72) Inventor: CHOI, Gi Dae, 34122 Daejeon (KR); PARK, Jieun, 34122 Daejeon (KR); LIM, Mok Keun, 34122 Daejeon (KR)
(74) Representative: Goddar, Heinz J.

(57) **Abstract**

Disclosed are a conductive resin composition, a method of preparing the same, and a molded article including the same. According to the present disclosure, a conductive resin composition having excellent moisture stability and processability in addition to excellent rigidity and conductivity; being capable of minimizing the influence of moisture and heat when exposed to external environments due to these properties; and thus being suitable for exterior parts replacing metal parts used in automobiles, a method of preparing the conductive resin composition, and a molded article including the conductive resin composition are provided.

## Description

### CROSS-REFERENCE TO RELATED APPLICATION

This application claims priority to Korean Patent Application No. 10-2023-0131372, filed on October 04, 2023 in the Korean Intellectual Property Office, the disclosure of which is incorporated herein by reference.

### BACKGROUND OF THE DISCLOSURE

### Field of the Disclosure

The present disclosure relates to a conductive resin composition, a method of preparing the same, and a molded article including the same, and more particularly to a conductive resin composition having excellent moisture stability and processability in addition to excellent rigidity and conductivity; being capable of minimizing the influence of moisture and heat when exposed to external environments due to these properties; and thus being suitable for exterior parts replacing metal parts used in automobiles, a method of preparing the conductive resin composition, and a molded article including the conductive resin composition.

### Description of the Related Art

In recent years, attempts have been made to manufacture automotive exterior parts using resins to improve fuel efficiency of automobiles, and a blended resin of polyphenylene ether and a polyamide is widely used as a material for automobile exterior parts.

The blended resin is a resin prepared for the purpose of combining excellent heat resistance and impact resistance of polyphenylene ether and excellent solvent resistance of a polyamide. However, the blended resin does not have sufficient heat resistance due to poor compatibility.

In general, automotive exterior parts require painting, and electrostatic painting is mainly used in consideration of environmental aspects, reduction of total volatile organic compounds (TVOCs), and appearance. To improve the efficiency of electrostatic painting, conductivity has been added by adding a conductive material such as carbon fiber or carbon black to the blended resin. However, when the conductive material is added, problems such as deterioration in appearance and reduction in impact resistance occur.

US Patent No. 6221283 discloses a technique for improving the conductivity of a conductive resin by including a continuous phase polyamide, a compatibilizer, and a conductivity imparting agent, Japanese Patent No. 3565836 discloses a method of preparing a resin composition with improved fluidity and impact resistance by including polyphenylene ether, a polyamide, and carbon black, and US Patent No. 6352654 discloses a conductive resin composition prepared by mixing a polyphenylene ether-polyamide blended resin and conductive carbon black to improve adhesion and ductility of a paint to the blended resin.

However, such a blended resin may have a limit in improving heat resistance. In addition, when a molded product is manufactured using a blended resin, pinholes may be generated on the surface of the molded product, and thus appearance may be deteriorated. In addition, mechanical properties or dimensional stability may be deteriorated by moisture.

Therefore, there is increasing demand for the development of a conductive resin composition having excellent appearance, mechanical properties, and conductivity, being capable of minimizing the influence of moisture and heat when exposed to external environments, and thus being applicable to automotive exterior parts.

### SUMMARY OF THE DISCLOSURE

Therefore, the present disclosure has been made in view of the above problems, and it is an object of the present disclosure to provide a conductive resin composition having excellent moisture stability and processability in addition to excellent appearance, rigidity, and conductivity; being capable of minimizing the influence of moisture and heat when exposed to external environments due to these properties; and thus being suitable for exterior parts replacing metal parts used in automobiles, a method of preparing the same, and a molded article including the same.

The above and other objects can be accomplished by the present disclosure described below.

In accordance with an aspect of the present disclosure, the above and other objects can be accomplished by the provision of a conductive resin composition, including: (A) 100 parts by weight of a base resin including a polyamide, a polyarylene ether and an aromatic elastomer; (B) 3 to 10 parts by weight of a polyarylene ether modified with multi-carboxylic acid; (C) 1 to 3.4 parts by weight of a polyfunctional reactant; (D) 0.5 to 3.2 parts by weight of carbon nanotubes; and (E) 0.3 to 3.4 parts by weight of an aromatic phenol resin.

(B) The polyarylene ether modified with multi-carboxylic acid and (D) the carbon nanotubes may be included as a masterbatch.

The base resin includes 30 to 70 % by weight of a polyamide, 20 to 60 % by weight of a polyarylene ether and 1 to 20 % by weight of an aromatic elastomer.

The aromatic elastomer may be a styrene-based rubber.

The multi-carboxylic acid may be at least one selected from maleic acid, maleic anhydride, fumaric acid, citric acid, citric anhydride, itaconic acid, and itaconic anhydride.

The multi-carboxylic acid may be included in an amount of 1.0 % by weight or less based on 100 % by weight in total of the conductive resin composition.

The polyfunctional reactant may include two or more functional groups selected from the group consisting of a carboxyl group, an amine group, a hydroxyl group, a maleic acid group, and an epoxy group.

The polyfunctional reactant may include a bisphenol A-type epoxy resin.

The carbon nanotubes may have a BET surface area of 180 to 600 m²/g.

The aromatic phenol resin may have a softening point of 70 °C or higher.

In accordance with another aspect of the present disclosure, there is provided a conductive resin composition, including: (A) 100 parts by weight of a base resin including a polyamide, a polyarylene ether and an aromatic elastomer; (B) 3 to 10 parts by weight of a polyarylene ether modified with multi-carboxylic acid; (C) 1 to 3.4 parts by weight of a polyfunctional reactant;

(D) 0.5 to 3.2 parts by weight of carbon nanotubes; and (E) 0.3 to 3.4 parts by weight of an aromatic phenol resin, wherein the conductive resin composition has a water absorption rate of 0.55 % or less.

The conductive resin composition may have a heat distortion temperature of 180 °C or higher.

The conductive resin composition may have a volume resistance of 10^⁵ Ohm.cm or less.

The conductive resin composition has a flow index of 5 g/10 min or more measured as 280 °C.

In accordance with still another aspect of the present disclosure, there is provided a method of preparing a conductive resin composition, the method including: kneading and extruding (A) 100 parts by weight of a base resin including a polyamide, a polyarylene ether and an aromatic elastomer; (B) 3 to 10 parts by weight of a polyarylene ether modified with multi-carboxylic acid; (C) 1 to 3.4 parts by weight of a polyfunctional reactant; (D) 0.5 to 3.2 parts by weight of carbon nanotubes; and (E) 0.3 to 3.4 parts by weight of an aromatic phenol resin, wherein the kneading and extruding are performed using an extruder equipped with 9 or more kneading blocks, and (B) the polyarylene ether modified with multi-carboxylic acid and (D) the carbon nanotubes are added as a masterbatch including (B) the polyarylene ether and (D) the carbon nanotubes..

In accordance with still another aspect of the present disclosure, there is provided a method of preparing a conductive resin composition, the method including: kneading and extruding (A) 100 parts by weight of a base resin including a polyamide, a polyarylene ether and an aromatic elastomer; (B) 3 to 10 parts by weight of a polyarylene ether modified with multi-carboxylic acid; (C) 1 to 3.4 parts by weight of a polyfunctional reactant; (D) 0.5 to 3.2 parts by weight of carbon nanotubes; and (E) 0.3 to 3.4 parts by weight of an aromatic phenol resin, wherein the kneading and extruding are performed using an extruder equipped with 9 or more kneading blocks, (B) the polyarylene ether modified with multi-carboxylic acid and (D) the carbon nanotubes are added as a masterbatch including (B) the polyarylene ether and (D) the carbon nanotubes, and the conductive resin composition has a water absorption rate of 0.55 % or less.

In accordance with yet another aspect of the present disclosure, there is provided a molded article including the conductive resin composition described above.

The molded article may be an electrostatically painted exterior automobile component.

### BRIEF DESCRIPTION OF THE DRAWINGS

The above and other objects, features and other advantages of the present disclosure will be more clearly understood from the following detailed description taken in conjunction with the accompanying drawings, in which:

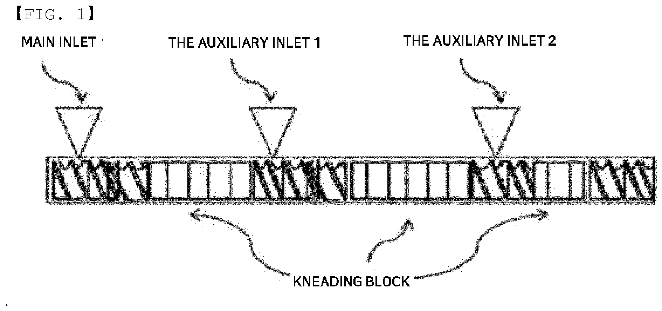

FIG. 1 schematically illustrates an extruder equipped with 9 or more kneading blocks for preparing the conductive resin composition of the present disclosure.

### DETAILED DESCRIPTION OF THE DISCLOSURE

Hereinafter, a conductive resin composition, a method of preparing the same, and a molded article including the same according the present disclosure are described in detail.

The present inventors confirmed that, when a conductive resin composition was prepared by mixing a base resin including a polyamide, a polyarylene ether and an aromatic elastomer with a polyarylene ether modified with multi-carboxylic acid, a reactant having two or more polyfunctional groups, a masterbatch of carbon nanotubes having a predetermined BET surface area, and an aromatic phenol resin in a predetermined composition ratio, a molded article including the conductive resin composition had excellent rigidity, conductivity and processability, and was hardly affected by moisture and heat when exposed to external environments. Based on these results, the present inventors conducted further studies to complete the present disclosure.

The conductive resin composition of the present disclosure includes (A) 100 parts by weight of the base resin including a polyamide, a polyarylene ether and an aromatic elastomer; (B) 3 to 10 parts by weight of the polyarylene ether modified with multi-carboxylic acid; (C) 1 to 3.4 parts by weight of the polyfunctional reactant; (D) 0.5 to 3.2 parts by weight of the carbon nanotubes; and (E) 0.3 to 3.4 parts by weight of the aromatic phenol resin. In this case, the conductive resin composition has excellent moisture stability and processability in addition to excellent rigidity and conductivity, is capable of minimizing the influence of moisture and heat when exposed to external environments, and thus is applicable to exterior parts replacing metal parts used in automobiles.

As another embodiment, the conductive resin composition of the present disclosure includes (A) 100 parts by weight of the base resin including a polyamide, a polyarylene ether and an aromatic elastomer; (B) 3 to 10 parts by weight of the polyarylene ether modified with multi-carboxylic acid; (C) 1 to 3.4 parts by weight of the polyfunctional reactant; (D) 0.5 to 3.2 parts by weight of the carbon nanotubes; and (E) 0.3 to 3.4 parts by weight of the aromatic phenol resin, and has a water absorption rate of 0.55 % or less. In this case, the conductive resin composition has excellent moisture stability and processability in addition to excellent rigidity and conductivity, is capable of minimizing the influence of moisture and heat when exposed to external environments, and thus is applicable to exterior parts replacing metal parts used in automobiles.

Hereinafter, each component of the conductive resin composition of the present disclosure is described in detail.

### (A) Base resin

### Polyamide

The polyamide of the present disclosure may be, for example, one or more selected from the group consisting of polyamide 6, polyamide 66, polyamide 46, polyamide 11, polyamide 12, polyamide 610, polyamide 612, polyamide 6/66, polyamide 6/612, polyamide MXD6, polyamide 6/MXD6, polyamide 66/MXD6, polyamide 6T, polyamide 6I, polyamide 6/6T, polyamide 6/6I, polyamide 66/6T, polyamide 66/6I, polyamide 6/6T/6I, polyamide 66/6T/6I, polyamide 9T, polyamide 9I, polyamide 6/9T, polyamide 6/9I, polyamide 66/9T, polyamide 6/12/9T, polyamide 66/12/9T, polyamide 6/12/9I and polyamide 66/12/6I, more preferably a homopolymer or copolymer including one or more selected from polyamide 6, polyamide 66, polyamide 46, polyamide 11 and polyamide 12, and most preferably may include polyamide 66. In this case, appearance quality and electromagnetic shielding performance are excellent.

The polyamide may be included in an amount of preferably 30 to 80 % by weight, more preferably 40 to 70 % by weight, more preferably 30 to 60 % by weight in the base resin. In this range, conductivity, appearance quality and moisture stability are all excellent.

Within the scope of the present disclosure, the polyamide may be prepared by a method commonly practiced in the art to which the present disclosure pertains, or commercially available products may be used as the polyamide, without particular limitation.

### Polyarylene ether

The polyarylene ether of the present disclosure is preferably polyphenylene ether (PPE), and as a specific example, may include one or more selected from the group consisting of poly(2,6-dimethyl1,4-phenylene)ether, poly(2,6-diethyl-1,4-phenylene)ether, poly(2,6-dipropyl-1,4-phenylene)ether, poly(2-methyl6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, poly(2,3,6-trimethyl-1,4-phenylene)ether, poly(2,3,6-triethyl-1,4-phenylene)ether, and copolymers thereof, preferably poly(2,6-dimethyl-1,4-phenylene) or a copolymer thereof.

Based on the content of the base resin, the polyarylene ether is preferably included in an amount of 15 to 60 % by weight, more preferably 20 to 60 % by weight, still more preferably 25 to 60 % by weight, still more preferably 35 to 60 % by weight. In this case, heat resistance and mechanical strength may be excellent.

The polyarylene ether means a polymer prepared by copolymerizing a major monomer and a comonomer, and as specific example, may be selected from a copolymer of poly(2,6-dimethyl-1,4-phenylene)ether and poly(2,3,6-trimethyl-1,4-phenylene)ether; a copolymer of poly(2,6-dimethyl-1,4-phenylene)ether and poly(2,3,6-triethyl-1,4-phenylene)ether; and combinations thereof. As a preferred example, the polyarylene ether copolymer is a copolymer of poly(2,6-dimethyl-1,4-phenylene)ether and poly(2,3,6-trimethyl-1,4-phenylene)ether.

The polyarylene ether preferably has an intrinsic viscosity of 0.2 to 0.8 dl/g, more preferably 0.3 to 0.6 dl/g, still more preferably 0.35 to 0.5 dl/g as measured at 25 °C in chloroform as a solvent. Within this range, heat resistance, processability, and appearance may be excellent while maintaining mechanical properties at a high level.

Within the scope of the present disclosure, the polyarylene ether may be prepared by a method commonly practiced in the art to which the present disclosure pertains, or commercially available products may be used as the polyarylene ether, without particular limitation.

### Aromatic elastomer

The aromatic elastomer of the present disclosure is preferably styrene-based rubber. As a specific example, the aromatic elastomer may include one or more selected from styrene-butadiene-styrene (SBS) copolymers, styrene-ethylene-butylene-styrene (SEBS) copolymers, styrene-butadiene (SB) copolymers, styrene-isoprene (SI) copolymers, styrene-isoprene-styrene (SIS) copolymers, alpha-methylstyrene-butadiene copolymers, styrene-ethylene-propylene copolymers, styrene-ethylene-propylene-styrene copolymers, styrene-(ethylene-butylene/styrene copolymer)-styrene copolymers, and modified polymers thereof. As a preferred example, the aromatic elastomer may include one or more selected from the group consisting of styrene-butadiene-styrene (SBS) copolymers, styrene-ethylene-butylene-styrene (SEBS) copolymers, and maleic anhydride-modified styrene-ethylene-butylene-styrene copolymers, as a more preferred example, a styrene-butadiene-styrene (SBS) copolymer. In this case, mechanical properties, such as impact strength, and conductivity may be excellent.

Based on the content of the base resin, the aromatic elastomer is preferably included in an amount of 1 to 20 % by weight, more preferably 3 to 20 % by weight, still more preferably 3 to 15 % by weight, still more preferably 5 to 10 % by weight. Within this range, in addition to mechanical properties and conductivity, appearance and moisture stability may be excellent.

In the aromatic elastomer, the content of an aromatic vinyl compound-derived structural unit is preferably 20 to 40 % by weight, more preferably 25 to 35 % by weight. Within this range, mechanical properties may be excellent.

Here, the content of the structural unit may be the content of the polymerized monomer.

In the aromatic elastomer, the content of rubber is preferably 60 to 80 % by weight, more preferably 65 to 75 % by weight. Within this range, mechanical properties may be excellent.

As a method of preparing the aromatic elastomer, methods commonly used in the art to which the present disclosure pertains may be used without particular limitation. As a specific example, emulsion polymerization, suspension polymerization, solution polymerization, or bulk polymerization may be used. As a preferred example, emulsion polymerization or bulk polymerization may be used.

### (B) Polyarylene ether modified with multi-carboxylic acid

The polyarylene ether modified with multi-carboxylic acid of the present disclosure may be added as an additive to enhance compatibility between (A) the base resin and (D) the carbon nanotubes described below and to impart processability.

In the present disclosure, the term "modification" is not particularly limited if it is a modification by a polymer modification method commonly used in the technical field to which the present disclosure belongs, and for example, it may mean grafting by introducing a multi-carboxylic acid into an unmodified polymer, and as another example, it may mean copolymerizing by introducing a multi-carboxylic acid as a comonomer during the production of an unmodified copolymer.

The multi-carboxylic acid may be at least one selected from maleic acid, maleic anhydride, fumaric acid, fumaric anhydride, citric acid, citric anhydride, itaconic acid and itaconic anhydride, and more preferably may include maleic acid. In this case, even a small amount of addition facilitates kneading and molding.

In the present disclosure, maleic acid is not particularly limited if it is a substituent recognized as a maleic acid group in the technical field to which the present disclosure belongs, and as a particular example, it means a functional group derived from maleic acid or maleic anhydride.

To improve thermal bonding strength between components constituting the conductive resin composition, the multi-carboxylic acid is preferably included in an amount of, for example, 1 % by weight or less, preferably 0.9 % by weight or less, more preferably 0.01 to 0.9 % by weight, more preferably 0.01 to 0.5 % by weight, even more preferably 0.01 to 0.2 % by weight based on 100 % by weight in total of the conductive resin composition.

The polyarylene ether modified with multi-carboxylic acid may be included in an amount of preferably 3 to 10 parts by weight, more preferably 3 to 9 parts by weight, more preferably 4 to 9 parts by weight based on 100 parts by weight in total of the base resin. In this range, appearance quality, conductivity and moisture stability may be greatly improved without deteriorating the original mechanical properties of the resin.

### (C) Polyfunctional reactant

The polyfunctional reactants of the present disclosure preferably include two or more functional groups selected from the group consisting of a carboxyl group, an amine group, a hydroxyl group, a maleic acid group, and an epoxy group. As a specific example, the polyfunctional reactants may include 2 to 5 functional groups selected therefrom. In this case, conductivity and moisture stability may be excellent.

Preferably, a bisphenol A-type epoxy resin having an epoxy functional group at end thereof may be included. In this case, conductivity and moisture stability may be excellent.

The bisphenol A-type epoxy resin preferably has an average epoxy equivalent of 2,000 to 6,000 and/or a number average molecular weight of 3,000 to 10,000 g/mol and/or a glass transition temperature of 50 to 120 °C, and/or is preferably a solid at room temperature. Within this range, appearance and moisture stability may be greatly improved without deterioration in the intrinsic mechanical properties of a resin.

In this description, number average molecular weight may be measured through gel permeation chromatography (GPC, Waters Breeze).

In this description, glass transition temperature (Tg) may be measured using a Pyris 6 DSC (Perkin Elmer Co.).

In this description, the average epoxy equivalent is average molecular weight per one epoxy group.

Based on 100 parts by weight in total of the base resin, the polyfunctional reactant may be included in an amount of preferably 1 to 3.4 parts by weight, more preferably 1 to 3 parts by weight, more preferably 1 to 2.5 parts by weight. In this range, appearance quality, conductivity and moisture stability may be greatly improved without deteriorating the original mechanical properties of the resin.

Within the scope of the present disclosure, the polyfunctional reactant may be prepared by a method commonly practiced in the art to which the present disclosure pertains, or commercially available products may be used as the polyfunctional reactant, without particular limitation

### (D) Carbon nanotubes

The carbon nanotubes of the present disclosure preferably have a BET surface area of 180 to 600 m²/g, more preferably 180 to 400 m²/g, still more preferably 180 to 300 m²/g, still more preferably 200 to 300 m²/g. Within this range, processability and conductivity may be greatly improved.

In this description, the BET surface area may be measured using a nitrogen adsorption method. As a specific example, the BET surface area may be measured by a BET 6-point method according to a nitrogen gas adsorption/distribution method using pore distribution measuring instrument (Porosimetry analyzer, Belsorp-II mini, Bell Japan Inc.). As another example, the BET surface area may be measured by a Brunauer, Emmett, or Teller method according to ASTM 6556.

For example, the carbon nanotubes may include one or more selected from the group consisting of single-walled carbon nanotubes (SWCNTs), double-walled carbon nanotubes (DWCNTs), and multi-walled carbon nanotubes (MWCNTs).

For example, the carbon nanotubes may be bundle-type (rope-type) nanotubes or non-bundle-type (entangle-type) nanotubes.

In this description, as the "bundle-type" and the "non-bundle-type", a "bundle-type" and a "non-bundle-type" commonly approved or defined in the art to which the present disclosure pertains may be used without particular limitation.

The carbon nanotubes preferably have an average diameter of 5 to 30 nm, more preferably 7 to 20 nm, still more preferably 10 to 15 nm. Within this range, conductivity and appearance may be greatly improved.

In this description, a measurement method commonly practiced in the art to which the present disclosure pertains may be used to measure the average diameter of the carbon nanotubes without particular limitation. As a specific example, the average diameter of the carbon nanotubes may be measured by electron microscopy analysis.

The carbon nanotubes may be a masterbatch of a polyolefin modified with a multi-carboxylic acid.

The types of the multi-carboxylic acid are the same as those described the item of (B) the polyarylene ether modified with multi-carboxylic acid.

The polyolefin may include, for example, a polyolefin modified with multi-carboxylic acid, preferably a polyolefin, particularly a polyethylene, which contains an alpha-olefin, modified with multi-carboxylic acid.

The modified polyolefin may be a copolymer in which the polyolefin is grafted with a hydroxyl group-containing ethylenically unsaturated compound, amino group-containing ethylenically unsaturated compound, epoxy group-containing ethylenically unsaturated compound, an aromatic vinyl compound, an unsaturated carboxylic acid and its derivative, a vinyl ester compound, or vinyl chloride or the like, more preferably a copolymer in which an unsaturated carboxylic acid or an anhydride monomer or derivative thereof is grafted.

Examples of the unsaturated carboxylic acid may include acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2.2.1]hept-2-ene-5,6-dicarboxylic acid.

In addition, examples of the anhydride monomer or derivative thereof may include malenylchloride, malenylimide, maleic anhydride, itaconic anhydride, citraconic anhydride, tetrahydrophthalic anhydride, bicyclo[2.2.1]hept-2-ene-5,6-dicarboxylic acid anhydride, dimethyl malate, monomethyl maleate, diethyl malate, diethyl fumarate, dimethyl itaconate, diethyl citraconate, dimethyltetrahydrophthalate, dimethyl bicyclo[2.2.1]hept-2-ene-5,6-dicarboxylate, hydroxyethyl (meth)acrylate, hydroxypropyl (meth)acrylate, glycidyl (meth)acrylate, aminoethyl methacrylate, and aminopropyl methacrylate.

Specifically, the modified polyolefin may be a copolymer in which acrylic acid or maleic anhydride is grafted onto polyolefin.

The grafting ratio of the modified polyolefin may be 0.1 to 3% by weight, specifically 0.3 to 2% by weight. If the grafting ratio is too small out of the range, the compatibility of the modified polyolefin resin is reduced, and if it is too large, unreacted substances are generated, which may reduce the processability, which is not desirable.

In the present disclosure, a grafting ratio may be measured from results obtained by acid-base titration of the modified polyolefin resin. As a particular example 1 g of the modified polyolefin resin is added to 150 ml of xylene saturated with water and refluxed for about 2 hours, and then a small amount of 1 wt% thymol blue-dimethylformamide solution is added thereto. A slightly excessive titration is performed with a 0.05 N sodium hydroxide-ethyl alcohol solution to obtain a blue-colored solution. This solution is then counter-titrated with a 0.05 N hydrochloric acid-isopropyl alcohol solution until it turns yellow, and an acid value is calculated. From this, the content (% by weight) of the compound grafted onto the modified olefin, i.e., acrylic acid or maleic anhydride, may be calculated. Here, the content of acrylic acid or maleic anhydride contained in the modified polyolefin resin corresponds to a grafting ratio.

The modified polyolefin may be obtained by heating a monomer such as the unsaturated carboxylic acid in the presence or absence of a radical initiator to undergo graft polymerization.

The graft polymerization is particularly preferable when performed in the presence of a radical initiator, as this can increase the efficiency of the graft polymerization reaction.

When using a masterbatch of a polyolefin modified with multi-carboxylic acid as the carbon nanotubes, the use amount may be preferably 0.1 to 3.2 parts by weight, more preferably 0.1 to 3 parts by weight, more preferably 0.1 to 2.8 parts by weight, even more preferably 0.3 to 2.5 parts by weight, most preferably 0.5 to 2.0 parts by weight based on 100 parts by weight in total of the base resin. In this range, mechanical properties, processability and conductivity maybe superior, and appearance quality and heat resistance may be excellent.

### (E) Aromatic phenol resin

The aromatic phenol resin of the present disclosure may be a polyhydroxyphenol-type compound.

The polyhydroxyphenol-type compound may be, for example, a condensation product of a phenol compound and an aldehyde or a ketone, and as a particular example, may be a synthetic polymer obtained by reacting phenol or a substituted phenol with formaldehyde.

The aromatic phenol resin may be, for example, linked by methylene and/or ether groups, and, as a particular example, may be phenol, cresol; xylenol; naphthol; an alkylphenol such as butylphenol, tert-butylphenol, isooctylphenol, nitrophenol, and phenylphenol; or any other substituted phenol.

As a particular example, the aromatic phenol resin may be a condensation product of phenol resin and formaldehyde, and may have a molecular weight of 600 to 4000 g/mol, preferably 900 to 2500 g/mol.

Commercially available aromatic phenol resins include products such as Renosin and Hirenol. In this case, moisture stability may be improved, and workability may be improved by lowering melt viscosity.

The aromatic phenol resin may have a softening point of, for example, 70 °C or higher, preferably 80 °C or higher, more preferably 90 to 130 °C, In this range, moisture stability and workability may be greatly improved.

In the present disclosure, the softening point may be measured at a heating rate of 2É using an FP90/FP83HT device manufactured by Mettler Toledo.

The aromatic phenol resin may be included in an amount of preferably 0.3 to 3.4 parts by weight, more preferably 0.3 to 3 parts by weight, more preferably 0.5 to 2.5 parts by weight based on 100 parts by weight in total of the base resin. In this range, moisture stability and the processability of the base resin may be greatly improved due to the dispersion effect with the polyfunctional reactant described above.

Within the scope of the present disclosure, the aromatic phenol resin may be prepared by a method commonly practiced in the art to which the present disclosure pertains, or commercially available products may be used as the aromatic phenol resin, without particular limitation.

### Conductive resin composition

As a specific example, the conductive resin composition of the present disclosure includes (A) 100 parts by weight of the base resin including a polyamide, a polyarylene ether and an aromatic elastomer; (B) 3 to 10 parts by weight of the polyarylene ether modified with multi-carboxylic acid; (C) 1 to 3.4 parts by weight of the polyfunctional reactant; (D) 0.5 to 3.2 parts by weight of the carbon nanotubes; and (E) 0.3 to 3.4 parts by weight of the aromatic phenol resin, and has a water absorption rate of 0.55 % or less.

The conductive resin composition has a heat distortion temperature of preferably 180 °C or higher, more preferably 185 °C or higher, 185 to 200 °C as a particular example, 185 to 195 °C as a preferred example. Within this range, physical property balance, moisture stability, conductivity, and appearance may be excellent.

The conductive resin composition is molded into a flat specimen with dimensions of 100 mm X 100 mm X 3 mm using an 80-ton Engel injection molding machine. A water absorption rate thereof measured as an increased weight % after immersion in distilled water at 23°C for 48 hours may be preferably 0.55% or less, more preferably 0.01 to 0.55 %, still more preferably 0.1 to 0.55 %, even still more preferably 0.3 to 0.55%, In this range, the physical property balance may be superior, and heat resistance, conductivity and appearance quality may be excellent.

The volume resistance of the conductive resin composition which is measured using PRS-801 equipment (Prostat Co.) is preferably 10^⁷ Ohm.cm or less, more preferably 10^³ to 10^⁵ Ohm.cm. Within this range, physical property balance, heat resistance, moisture stability, and appearance may be excellent.

The conductive resin composition preferably has a tensile strength of 55 MPa or more, more preferably 60 MPa or more, as a specific example, 55 to 70 MPa, as a preferred example, 60 to 70 MPa, as measured under conditions of a specimen thickness of 3.2 mm and a measurement speed of 5 mm/min according to ASTM D638. Within this range, physical property balance, heat resistance, conductivity, moisture stability, and appearance may be excellent.

The conductive resin composition preferably has a notched Izod impact strength of 170 J/m or more, more preferably 170 to 280 J/m, 170 to 250 J/m as a preferred example, as measured under conditions of a specimen thickness of 4 mm and a measurement temperature of 25 °C according to ISO 180A. Within this range, physical property balance, heat resistance, conductivity, moisture stability, and appearance may be excellent.

As a measurement result of the resin, discharged under conditions of 280°C and 5 kg load, according to ISO 1133, the conductive resin composition has a melting index of 7 g/10 min, more preferably 10 to 25 J/m. Within this range, physical property balance, heat resistance, conductivity, moisture stability, and appearance may be excellent.

### Method of preparing conductive resin composition

The method of preparing the conductive resin composition of the present disclosure includes kneading and extruding preferably (A) 100 parts by weight of the base resin including a polyamide, a polyarylene ether and an aromatic elastomer; (B) 3 to 10 parts by weight of the polyarylene ether modified with multi-carboxylic acid; (C) two or more types of the polyfunctional reactants 1 to 3.4 parts by weight; (D) 0.5 to 3.2 parts by weight of the carbon nanotubes; and (E) 0.3 to 3.4 parts by weight of the aromatic phenol resin, wherein the kneading and extruding are performed using an extruder equipped with 9 or more kneading blocks, and (B) the polyarylene ether modified with multi-carboxylic acid and (D) the carbon nanotubes are added as a masterbatch including (B) the polyarylene ether and (D) the carbon nanotubes. In this case, there is an advantage of providing a conductive resin composition having excellent moisture stability and processability in addition to excellent rigidity and conductivity; capable of minimizing the influence of moisture and heat when exposed to external environments due to these properties; and thus being suitable for exterior parts replacing metal parts used in automobiles.

As another embodiment, the method of preparing the conductive resin composition of the present disclosure kneading and extruding (A) 100 parts by weight of the base resin including a polyamide, a polyarylene ether and an aromatic elastomer; (B) 3 to 10 parts by weight of the polyarylene ether modified with multi-carboxylic acid; (C) two or more types of polyfunctional reactants 1 to 3.4 parts by weight; (D) 0.5 to 3.2 parts by weight of the carbon nanotubes; and (E) 0.3 to 3.4 parts by weight of the aromatic phenol resin, wherein the kneading and extruding are performed using an extruder equipped with 9 or more kneading blocks, (B) the polyarylene ether modified with multi-carboxylic acid and (D) the carbon nanotubes are added as a masterbatch including (B) the polyarylene ether and (D) the carbon nanotubes, and the conductive resin composition has a water absorption rate of 0.55 % or less. In this case, in addition to rigidity, and conductivity, moisture stability and processibility may be excellent, thereby minimizing the influence of heat when exposed to external environments. Thus, there is an advantage of providing a conductive resin composition suitable for exterior parts replacing metal parts used in automobiles.

For example, the kneading and extruding may be performed at a barrel temperature of 230 to 310 °C, preferably 240 to 300 °C, more preferably 250 to 290 °C, still more preferably 250 to 280 °C. In this case, throughput per unit time may be high, melt-kneading may be sufficiently performed, and thermal decomposition of resin components may be prevented.

For example, the kneading and extruding may be performed at a screw rotation rate of 100 to 500 rpm, preferably 150 to 400 rpm, more preferably 100 to 350 rpm, still more preferably 150 to 320 rpm, still more preferably 200 to 310 rpm. Within this range, throughput per unit time may be high, process efficiency may be excellent, and excessive cutting of carbon nanotubes may be prevented, thereby improving the conductivity of a final product.

The conductive resin composition obtained by the kneading and extrusion may be provided in a pellet form.

Hereinafter, the present disclosure will be described with reference to FIG. 1.

FIG. 1 below schematically illustrates an extruder equipped with 9 or more kneading blocks for preparing the conductive resin composition of the present disclosure.

The type of extruder is not particularly limited, and an extruder commonly used in the art may be appropriately selected and used. For example, a single-screw extruder equipped with one screw or a multi-screw extruder equipped with a plurality of screws may be used. Considering uniform kneading of materials, ease of processing, and economic efficiency, a twin-screw extruder equipped with two screws is preferably used.

The extruder includes a raw material feeder for feeding materials into a barrel, a screw for conveying and kneading the fed materials, and a die for extruding the kneaded materials. In this case, the screw consists of a plurality of screw elements for various functions.

In the extruder, one or more raw material feeders may be provided, and two or more raw material feeders may be provided, as needed. In addition, a main inlet may be provided, and two or more auxiliary inlets may be optionally provided.

As a specific example, the base resin, the polyarylene ether modified with multi-carboxylic acid, the polyfunctional reactant, the carbon nanotubes, and the aromatic phenol resin may be fed into the main inlet batchwise. As another example, the base resin and the polyfunctional reactant may be fed into the main inlet, and then the polyarylene ether modified with multi-carboxylic acid, the carbon nanotubes, and the aromatic phenol resin may be fed into the auxiliary inlets.

As a preferred example, components other than a polyamide may be fed into the main inlet, and a polyamide may be fed into the auxiliary inlets.

As still another example, the base resin and the polyfunctional reactant may be fed into the main inlet, and some of the polyarylene ether modified with multi-carboxylic acid, carbon nanotubes and the aromatic phenol resin may be fed into the auxiliary inlet 1, and then the remainder may be fed into the auxiliary inlet 2.

The kneading blocks of the present disclosure correspond to the screw elements. Specifically, each kneading block consists of a plurality of discs, preferably 3 to 7 discs, 5 to 7 discs, 3 to 5 discs, or 4 to 5 discs, and has a polygonal cross-section or an elliptical cross-section. The kneading blocks are arranged continuously in a direction in which materials are conveyed. In addition, in the kneading block, the phase angle of the discs (indicating the travel angle between discs) is preferably 45 to 90°.

In addition, the kneading block includes a forward kneading block capable of conveying, distributing, and mixing materials, a neutral kneading block capable of distributing and mixing materials without conveying the same, and a backward kneading block capable of conveying materials in a direction opposite to the conveying direction.

For example, the conductive concentrated resin composition according to the present disclosure may be prepared using a method including a step of performing kneading and extrusion using an extruder equipped with 9 or more, preferably 10 or more, more preferably 12 or more kneading blocks, as a preferred example, 9 to 18 kneading blocks, as a more preferred example, 10 to 18 kneading blocks, as a still more preferred example, 12 to 16 kneading blocks. In this case, it may be effective to arrange the kneading blocks in the order of forward kneading blocks, neutral kneading blocks, and backward kneading blocks with respect to a resin flow direction. Depending on combination manners, a continuous or separate block combination may be used. In this case, the dispersibility of a conductive filler and compatibility between compositions may be further improved, and thus a high-quality conductive resin composition may be provided.

9 or more kneading blocks may be arranged continuously, or may be arranged discontinuously between screws. As a specific example, 3 to 6 kneading blocks may be provided continuously between the main inlet and the auxiliary inlet 1, 3 to 8 kneading blocks may be provided continuously between the auxiliary inlet 1 and the auxiliary inlet 2, and 2 to 5 kneading blocks may be provided between the auxiliary inlet 2 and an outlet (not shown) . With this configuration, local heat generation during melt-kneading may be controlled to prevent thermal deformation of raw materials. In addition, excessive cutting of nanoscale components may be prevented, thereby preventing deterioration in conductivity and physical properties.

### Molded article

The molded article of the present disclosure may be, for example, molded with the conductive resin composition of the present disclosure and formed by coating the surface thereof with a coating layer. In this case, the surface and the coating layer have excellent coating appearance quality and there is an effect of delaying cracking after coating.

The coating layer may be a paint formed electrostatically on a substrate surface made of the conductive resin composition.

The method of manufacturing the molded article may include, for example, a step of injection-molding the above-described conductive resin composition; and a step of electrostatically painting the injection-molded article. In this case, excellent paint appearance quality may be provided without deterioration of mechanical properties including surface impact, and processability.

The conductive resin composition may be, for example, an extruded pellet. In this case, reproducibility, process stability, processability, and the like may be excellent.

The method of manufacturing the molded article may include, for example, a degreasing step of removing oil, etc. from the injection-molded article before the painting step.

In the degreasing step, oil may be preferably removed by treating the injection-molded article with a surfactant. The surfactant is not particularly limited if it is a surfactant commonly used in the degreasing step in the technical field to which the present disclosure belongs.

The degreasing step may be performed, for example, at 40 to 60 °C for 1 to 30 minutes, preferably at 50 to 60 °C for 5 to 10 minutes. In this range, excellent degreasing efficiency may be provided.

In the painting step, a painting method is not particularly limited and may be appropriately selected and performed within the scope of what is usually practiced, and, preferably, an electrostatic painting method may be performed.

The use of the molded article is not particularly limited, but it may preferably be an automobile exterior part. In this case, the demanding paint appearance and breakage reliability required in the automobile industry may be greatly satisfied.

In describing the conductive resin composition, the method of preparing the same and the molded article of the present disclosure, it is stated that other conditions or equipment, etc. that are not explicitly described may be appropriately selected within ranges commonly practiced in the art and are not particularly limited.

Hereinafter, the present disclosure will be described in more detail with reference to the following preferred examples. However, these examples are provided for illustrative purposes only and should not be construed as limiting the scope and spirit of the present disclosure. In addition, it will be apparent to those skilled in the art that various changes and modifications may be made without departing from the spirit and scope of the present disclosure, and such changes and modifications are also within the scope of the appended claims.

### [Examples]

Components used in examples and comparative examples below are as follows.
* Polyamide: A 360 PA66 product was used (Invista Co.).
* Polyarylene ether: A 040 product (Bluestar Co.) was used as polyphenylene oxide resin (PPE).
* Aromatic elastomer: An SBS501 product (styrene content: 30 % by weight, butadiene rubber content: 70 % by weight, LG Chemical Co.) was used as styrene-based rubber.
* Polyarylene ether modified with multi-carboxylic acid: A ZA product (G Farm Co.) of a polyphenylene oxide (mah-PPO) structure modified with maleic anhydride was used.
* Polyfunctional reactant: A reactive epoxy YD019 product (epoxy equivalent: 2,000 to 3,000, Kukdo Chemical Co.) was used.
* Carbon nanotubes masterbatch: A CP1002M carbon nanotube product (LG Chemical Co) with a BET surface area of 250 m²/g was used as carbon nanotubes to graft an LC670 product (LG Chemical Co) onto a polyethylene resin containing α-olefin with maleic anhydride, and the grafting ratio was 0.5 to 2% by weight.
* Aromatic phenol resin: A Hirenol KNR-1200 product (Kolon Industries Co.) which has a softening point of 90°C or higher was used.

### Examples 1 to 5 and Comparative Examples 1 to 4

According to the contents shown in Table 1, the components shown Tables 1 and 2 were melt-kneaded and extruded under conditions of a temperature 250 to 310 °C and a rotation rate (rpm) of 300 revolutions/min using a twin-screw extruder equipped with 10 mixing blocks (T40, SM Co.) to prepare pellets, and the prepared pellets were injected using an injection machine (80 tons, Engel Co.) to prepare specimens for evaluation.

The twin-screw extruder has a total of two or more inlets. Components other than the polyamide were fed into a main inlet, and the polyamide was fed into the auxiliary inlets.

### [Test Examples]

The properties of specimens prepared in Examples 1 to 5 and Comparative Examples 1 to 4 were measured according to the following methods, and the results are shown in Table 1 below.
* Tensile strength (MPa): Using a specimen having a thickness of 3.2 mm, tensile strength was measured at a measurement rate of 5 mm/min according to ASTM D638.
* Impact strength(J/m): A specimen having a thickness of 4 mm was notched, and the Notched Izod impact strength of the specimen was measured at room temperature (23 °C) according to ISO 180A.
* Heat distortion temperature (°C): The heat distortion temperature of a specimen having a thickness of 4 mm was measured under a stress of 0.45 MPa according to ISO 75-2.
* Volume resistance (Ohm.cm): The surface resistance of an injection specimen was measured using a PRS-801 (Prostat Co.).
* Fluidity (g/10 min): A resin discharged at 280°C under a load of 5 kg was measured by the ISO 1133 method.
* Water absorption rate (%): A flat specimen having a size of 100 mm × 100 mm × 3 mm was prepared by performing injection using an injection machine (80 tons, Engel Co.). The specimen was immersed in distilled water at 23 °C for 48 hours, and the increased weight thereof was measured in % by weight.

**[Table 1]**

| Classif ication | Exa mpl e1 | Exa mpl e2 | Exa mpl e3 | Exa mpl e4 | Exa mpl e5 | Compa rativ e Examp le1 | Compa rativ e Examp le2 | Compa rativ e Examp le3 | Compa rativ e Examp le4 |
|---|---|---|---|---|---|---|---|---|---|
| Polyami de | 60 | 50 | 40 | 30 | 50 | 50 | 50 | 50 | 50 |
| Polyary lene ether | 35 | 40 | 50 | 60 | 40 | 40 | 40 | 40 | 40 |
| Aromati c elastom er | 5 | 10 | 10 | 10 | 10 | 10 | 10 | 10 | 5 |
| Polyary lene ether modifie d with multi-carboxy lic acid | 3 | 4 | 5 | 8 | 4 | 4 | - | 4 | 5 |
| Polyfun ctional reactan t | 3 | 1 | 2 | 3 | 2 | 2 | 2 | - | 4 |
| Carbon nanotub es | 2 | 1 | 1 | 1 | 2.5 | 1 | 1 | 1 | 4 |
| Aromati c phenol resin | 2 | 0.5 | 1 | 2 | 3 | - | 3 | 3 | 4 |
| Tensile strengt h (MPa) | 60 | 60 | 65 | 60 | 64 | 50 | 45 | 50 | 45 |
| Impact strengt h (J/m) | 170 | 200 | 210 | 250 | 230 | 160 | 95 | 150 | 120 |
| Heat distort ion tempera ture (°C ) | 190 | 191 | 188 | 191 | 187 | 183 | 182 | 171 | 175 |
| Volume | 10^³ | 10^⁴ | 10^⁴ | 10^⁵ | 10^³ | 10^⁶ | 10^⁵ | 10^⁵ | 10^⁴ |
| resista nce (Ohm/sq ) | | | | | | | | | |
| Fluidit y (g/10 min) | 20 | 14 | 15 | 19 | 13 | 8 | 9 | 11 | 15 |
| Water absorpt ion rate (%) | 0.5 5 | 0.5 5 | 0.5 2 | 0.4 5 | 0.5 2 | 1.02 | 0.85 | 0.85 | 0.84 |

As shown in Table 1, it was confirmed that the conductive resin compositions (Examples 1 to 5) according to the present disclosure were significantly superior in all measured items, such as tensile strength, impact strength, heat distortion temperature, volume resistance, fluidity and water absorption rate, compared to the conductive resin compositions (Comparative Examples 1 to 4) outside the range of the present disclosure.

In conclusion, it was confirmed that, by mixing the base resin including the polyamide, the polyarylene ether and the aromatic elastomer with the polyarylene ether modified with multi-carboxylic acid, the reactant having two or more polyfunctional groups, the masterbatch of carbon nanotubes having a predetermined BET surface area and the aromatic phenol resin in the predetermined composition ratio, the conductive resin composition according to the present disclosure had excellent rigidity, conductivity and processability and was almost unaffected by moisture and heat due to exposure to an external environment, making it suitable for electrostatic painting of automobiles.

The present invention has an effect of providing a conductive resin composition having excellent moisture stability and processability in addition to excellent rigidity and conductivity; being capable of minimizing the influence of moisture and heat when exposed to external environments due to these properties; and thus being suitable for exterior parts replacing metal parts used in automobiles, a method of preparing the conductive resin composition, and a molded article including the conductive resin composition.

## Claims

1. A conductive resin composition, comprising:
(A) 100 parts by weight of a base resin comprising a polyamide, a polyarylene ether and an aromatic elastomer;
(B) 3 to 10 parts by weight of a polyarylene ether modified with multi-carboxylic acid;
(C) 1 to 3.4 parts by weight of a polyfunctional reactant;
(D) 0.5 to 3.2 parts by weight of carbon nanotubes; and
(E) 0.3 to 3.4 parts by weight of an aromatic phenol resin.

2. The conductive resin composition according to claim 1, wherein (B) the polyarylene ether modified with multi-carboxylic acid and (D) the carbon nanotubes are comprised as a masterbatch.

3. The conductive resin composition according to claim 1, wherein the base resin comprises 30 to 70 % by weight of a polyamide, 20 to 60 % by weight of a polyarylene ether and 1 to 20 % by weight of an aromatic elastomer.

4. The conductive resin composition according to claim 1, wherein the aromatic elastomer is a styrene-based rubber.

5. The conductive resin composition according to claim 1, wherein the multi-carboxylic acid is at least one selected from maleic acid, maleic anhydride, fumaric acid, citric acid, citric anhydride, itaconic acid, and itaconic anhydride and wherein the multi-carboxylic acid is comprised in an amount of 1.0 % by weight or less based on 100 % by weight in total of the conductive resin composition.

6. The conductive resin composition according to claim 1, wherein the polyfunctional reactant comprises two or more functional groups selected from the group consisting of a carboxyl group, an amine group, a hydroxyl group, a maleic acid group, and an epoxy group.

7. The conductive resin composition according to claim 1, wherein the polyfunctional reactant comprises a bisphenol A-type epoxy resin.

8. The conductive resin composition according to claim 1, wherein the carbon nanotubes have a BET surface area of 180 to 600 m²/g.

9. The conductive resin composition according to claim 1, wherein the aromatic phenol resin has a softening point of 70 °C or higher.

10. A conductive resin composition, comprising:
(A) 100 parts by weight of a base resin comprising a polyamide, a polyarylene ether and an aromatic elastomer;
(B) 3 to 10 parts by weight of a polyarylene ether modified with multi-carboxylic acid;
(C) 1 to 3.4 parts by weight of a polyfunctional reactant;
(D) 0.5 to 3.2 parts by weight of carbon nanotubes; and
(E) 0.3 to 3.4 parts by weight of an aromatic phenol resin,
wherein the conductive resin composition has a water absorption rate of 0.55 % or less.

11. The conductive resin composition according to claim 1 or 10, wherein the conductive resin composition has a heat distortion temperature of 180 °C or higher.

12. The conductive resin composition according to claim 1 or 10, wherein the conductive resin composition has a volume resistance of 10^⁵ Ohm.cm or less.

13. The conductive resin composition according to claim 1 or 10, wherein the conductive resin composition has a flow index of 5 g/10 min or more.

14. A method of preparing a conductive resin composition, the method comprising:
kneading and extruding (A) 100 parts by weight of a base resin comprising a polyamide, a polyarylene ether and an aromatic elastomer; (B) 3 to 10 parts by weight of a polyarylene ether modified with multi-carboxylic acid; (C) 1 to 3.4 parts by weight of a polyfunctional reactant; (D) 0.5 to 3.2 parts by weight of carbon nanotubes; and (E) 0.3 to 3.4 parts by weight of an aromatic phenol resin,
wherein the kneading and extruding are performed using an extruder equipped with 9 or more kneading blocks, and
(B) the polyarylene ether modified with multi-carboxylic acid and (D) the carbon nanotubes are added as a masterbatch comprising (B) the polyarylene ether and (D) the carbon nanotubes.

15. A molded article comprising the conductive resin composition according to one of claims 1 to 9.
